# EUROPÄISCHE PATENTSCHRIFT

(11) **EP 0 643 240 B1**
(45) Veröffentlichungstag und Bekanntmachung des Hinweises auf die Patenterteilung: **15.05.1996**
(21) Anmeldenummer: 94109448.4
(22) Anmeldetag: 18.06.1994
(51) Int. Cl.: F16H 9/24, F16G 5/18

(54) **Laschenkette für stufenlos verstellbare Kegelscheibengetriebe**
Plate-link chain for continuously variable cone pulley gearing
Chaîne de galle pour un variateur continu à poulies coniques

(30) Priorität: 10.09.1993 DE 4330696
(43) Veröffentlichungstag der Anmeldung: 15.03.1995
(73) Patentinhaber: P.I.V. Antrieb Werner Reimers GmbH & Co KG, 61352 Bad Homburg (DE)
(72) Erfinder: Wolf, Hans-Jürgen, D-61350 Bad Homburg (DE)
(74) Vertreter: Lemcke, Rupert, Dipl.-Ing.

(56) Entgegenhaltungen:
- DE-B- 1 303 511
- DE-B- 2 848 167
- TECHNISCHE RUNDSCHAU , Bd. 81, no.17, 28.April 1989 BERN,CH, Seiten 48-53, XP 000050491 DITTRICH, O.: 'DAS STUFENLOSE KETTENGETRIEBE ALS HAUPTANTRIEB IM AUTOMOBIL'

## Beschreibung

Die Erfindung betrifft eine Laschenkette für stufenlos verstellbare Kegelscheibengetriebe nach dem Oberbegriff des Anspruchs 1.

Bei solchen Laschenketten, wie sie beispielsweise durch die DE-PS 28 48 167 bekannt sind, haben die einzelnen Laschen sich in Kettenlängsrichtung im wesentlichen stegförmig erstreckende Teile sowie an ihren Enden angeordnete Endstege, durch die die Gelenkbohrungen abgeschlossen werden.

Als Bauformen für die hier in Frage kommenden Laschenketten gibt es recht verschiedene Varianten. So können die Laschenketten, wie beispielsweise in der DE-AS 11 19 065 gezeigt, zwischen den durch die Wiegestückpaare gebildeten Gelenkstellen Druckstücke zur Reibkraftübertragung aufweisen, die das Laschenpaket und die dieses seitlich zusammenhaltenden Klammerlaschen quer zur Kettenlängsrichtung in eine dafür vorgesehenen Ausnehmung durchqueren, um mit Ihren Stirnseiten in Reibkontakt mit den Kegelscheiben zu kommen. Auch sind solche Ketten bekannt, beispielsweise nach der DE-AS 12 94 130, bei denen die die Kettenglieder bildenden Laschenpakete durch Gelenkbolzen gelenkig miteinander verbunden sind, wobei dann zwischen den jeweiligen Gelenkbolzen in die Laschenpakete z. B. T-förmige Druckstücke eingeschoben sind, die der Reibkraftübertragung dienen.

Neuere Laschenketten, wie sie durch die DE-AS 13 02 795 und 23 56 289 bekannt sind, benutzen die Paare der gelenkbildenden Wiegestücke gleichzeitig als die Druckstücke, die auch in reibschlüssige Kontakte mit den Kegelscheiben zur Leistungsübertragung treten.

Zu einer anderen Bauform sei auf das DE-GM 19 79 429 hingewiesen. Hier sind wiederum Laschenpakete vorhanden, die das jeweilige Kettenglied bilden und durch Gelenkbolzen miteinander verbunden sind. Zwischen den Gelenkstellen sind die Laschenpakete von Druckringen umfangen, die um eine zur Längsrichtung der Kette parallele Achse um das Laschenpaket drehbar sind und die in den Reibkontakt mit den Kegelscheiben treten.

Bei allen derartigen Laschenketten treten beim Einlauf der Kette in den Keil des jeweiligen Kegelscheibenpaares Stöße zwischen den Druckstücken und den Kegelscheiben auf, was zu einem lästigen Geräusch führt.

Um diesen Problemen zu begegnen, wurde mit einer Laschenkette der eingangs genannten Gattung durch die Variierung des Teilungsabstandes der Kettenglieder das Resonanzschwingungsverhalten gestört und damit gedämpft bzw. abgebrochen, ohne daß die Leistungsübertragungsfähigkeit zwischen Kette und Kegelscheiben beeinträchtigt wurde und ohne daß dadurch grundsätzlich am Kettenaufbau eine Änderung vorgenommen werden mußte. Geändert werden mußte lediglich für die Kettenglieder unterschiedlicher Länge die Länge der meistens durch Stanzen hergestellten Laschen.

Dieser unterschiedliche Teilungsabstand gerät jedoch bei heutigen, hohe Anforderungen erfüllenden Ketten in eine Größenordnung, die Abweichungen von dem "normalen" Teilungsabstand in die Größenordnung von bis zu 30 % wünschenswert erscheinen läßt. Überträgt man dies auf eine Kettenausbildung im Dreilaschenverband, wie sie nach der eingangs wiedergegebenen Gattung Gegenstand der Anmeldung ist, so ergibt sich dadurch, daß die Kettenlaschen ihre seitliche Führung gegenüber dem Nachbarlaschen verlieren bzw. daß benachbarte Kettenlaschen durch seitliches Verrutschen in gegenseitige frontale Berührung kommen können, um dann bei der betriebsgemäßen Arbeitsweise der Kette in gegenseitig blockierende Anlage zu geraten, die sogar zum Auseinandersprengen des Kettenverbandes führen kann.

Aufgabe der Erfindung ist es daher, bei einer Laschenkette der eingangs genannten Art, die im Dreilaschenverband aufgebaut ist, eine Möglichkeit anzugeben, wie auch größere Unterschiede in den Teilungsabständen ohne die Gefahr einer Instabilität der Kette bzw. einer Gefahr des Auseinandersprengens des Kettenverbandes möglich werden.

Diese Aufgabe ist erfindungsgemäß durch die Merkmale des Anspruchs 1 gelöst.

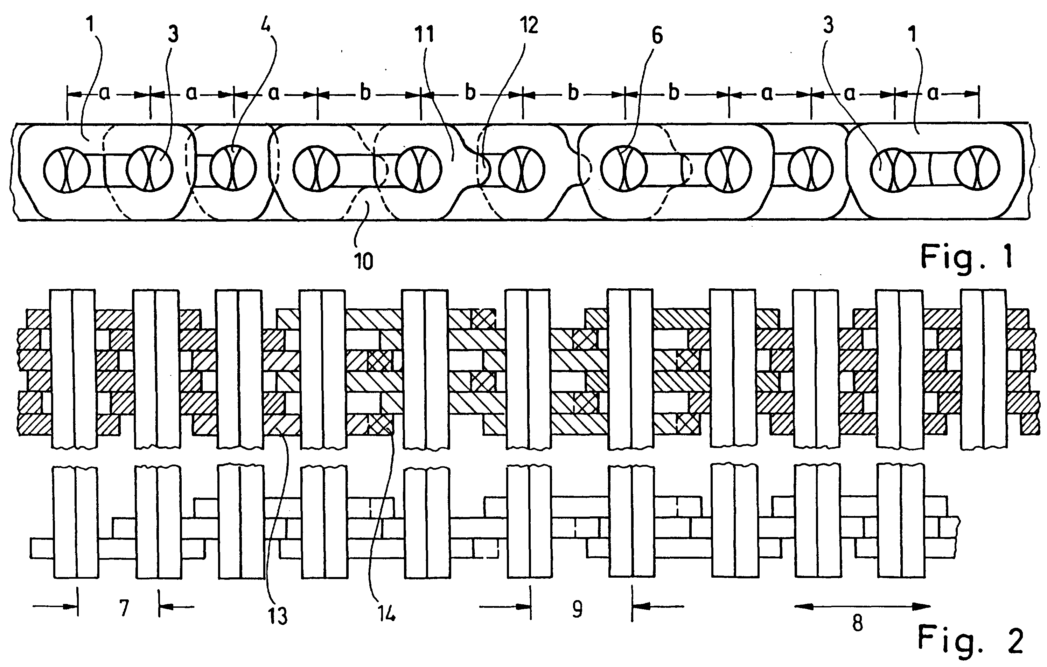

Durch diese erfindungsgemäßen Maßnahmen sind auch bei den die größeren Teilungsabstände mitbildenden Kettenlaschen Vorsehungen getroffen, daß diese immer seitlich gegeneinander geführt sind bzw. nicht stirnseits gegeneinander in Kontakt geraten können, wobei nunmehr auch Änderungen des normalen Kettenteilungsabstandes möglich werden, die eine Abweichung von beispielsweise 30 % gegenüber dem normalen Kettenteilungsabstand erlauben. Darauf hingewiesen werden darf noch einmal, daß sich der Gegenstand der Erfindung und die damit verbundene Problematik ausschließlich auf im sogenannten Dreilaschenverband aufgebaute Laschenketten bezieht und nicht auf im Zweilaschenverband aufgebaute Ketten, bei denen das vorstehend geschilderte Problem nicht auftreten kann. Der Unterschied zwischen den im Zweilaschenverband und im Dreilaschenverband aufgebauten Ketten ist beispielsweise ausführlich in der DE-PS 30 27 834 anhand der dortigen Figuren 1 bis 3 beschrieben.

Im Zuge der Erfindung hat es sich als zweckmäßig erwiesen, daß die Erweiterung der zu einem vergrößerten Teilungsabstand gehörende und die in diesen hineinragenden Laschengrundtypen als im Bereich der Längsmitte der Radialstege angeordnete, außen abgerundete Nase ausgebildet ist.

Weitere Einzelheiten und erfindungswesentliche Merkmale ergeben sich aus der nachfolgenden Beschreibung einer Ausführungsform, die auf der Zeichnung in Figur 1 in Seitenansicht und in Figur 2 in Draufsicht dargestellt ist.

Die Zeichnung zeigt ein Stück Laschenkette, das grundsätzlich aus normalen Kettenlaschen 1 besteht. Die durch die Laschen 1 gebildeten Kettenglieder sind gelenkig über Gelenkstücke miteinander verbunden, die aus Paaren von Wiegestücken (Bolzen) 3 bestehen, die in die Aussparungen 4 der Laschen eingesetzt sind und mit den jeweils zugehörenden Laschen über eine formschlüssige Verbindung drehverbunden sind.

Die Wiegestücke 3 haben aufeinander zu gerichtete konkave Wiegeflächen 6, über die sie aufeinander abrollen können, was die Gelenkbeweglichkeit der benachbarten Kettenglieder ergibt.

Die einzelnen Gelenke haben von Mitte zu Mitte einen Abstand 7, den man im allgemeinen als Kettenteilung bezeichnet. Die Größe dieser Kettenteilung 7 ist abhängig von der in Kettenlaufrichtung 8 gegebenen Erstreckung der Wiegestücke 3 sowie dem zwischen den einzelnen Gelenkstellen gebildeten Abstand.

Wie aus der Zeichnung ersichtlich, findet im vorliegenden Falle die normale Kettenteilung 7 Verwendung (auch mit der Ziffer a bezeichnet), während die Kettenteilung im Verlauf der Kette Änderungen in Form von Vergrößerungen der Kettenteilung durch Abstände 9 (auch mit der Ziffer b versehen) aufweist, um auf diese Weise das Einzeltonverhalten der Gelenkstellen beim Einlauf in die Kegelscheibenpaare zu stören.

Damit nun diese Gelenkabstände 9 auf ein erhebliches Maß gebracht werden können, wie dies heute erforderlich wird, sind die zu den vergrößerten Teilungsabständen 9 (bzw. b) gehörenden Kettenlaschen 10 an wenigstens einem endständigen Radialsteg 11 mit einer Erweiterung 12 versehen, die bis an den nach außerhalb der Laschen 10 benachbarten Gelenkbolzen 3 reicht, damit also diese Lasche 10 seitlich gegenüber den in Kettenlängsrichtung folgenden Laschen so führt, daß die jeweilige Lasche 10 nicht stirnseits durch seitliches Verrutschen mit Nachfolgelaschen in Kollision geraten kann.

Wie aus Fig. 2 ersichtlich, können bei Zwischenlaschen 13, die praktisch den Übergang zwischen der einen Kettenteilung 7 und der anderen Kettenteilung 9 bilden, mit Nasen 14 entsprechende Maßnahmen ergriffen worden sein.

Die dargestellte Kette ermöglich es in einfacher Weise, die Teilungsabstände a bzw. b in großem Umfange zu variieren, ohne daß dadurch die Funktionsfähigkeit der Kette in Frage gestellt würde. Auf der anderen Seite ist die Funktionsfähigkeit mit Hilfe der Nasen 12, 14 in einer einfachen Weise so gesichert, daß sich das Kettengewicht nicht negativ gestaltet und das auch auf der anderen Seite die Herstellung der einzelnen Kettenlaschen nicht besonders kompliziert wird.

## Patentansprüche

1. Laschenkette für stufenlos verstellbare Kegelscheibengetriebe, deren die Kettenglieder bildenden und im Dreilaschenverband aufgebauten Pakete von Laschen durch Bolzen (3) gelenkig miteinander verbunden sind und welche quer zur Kettenlängsrichtung wirksame Druckstücke zur Reibkraftübertragung zwischen Kegelscheiben und Laschenkette aufweist, wobei der Teilungsabstand (7, 9) der Kettenglieder zwischen den Gelenkstellen durch Verwendung entsprechend verschiedener Laschengrundtypen (1, 10) regelmäßig oder unregelmäßig unterschiedlich ausgebildet ist,
dadurch gekennzeichnet,
daß die zu einem vergrößerten Teilungsabstand (9) gehörenden und die in diesen hineinragenden Laschengrundtypen (1, 10) an wenigstens einem ihrer beiden radialen Endstege (11) in Kettenlaufrichtung (8) mit einer zwischen die Folgelaschen, gegebenenfalls bis an den nach außerhalb der Laschen benachbarten Gelenkbolzen (3), reichenden Erweiterung (12) versehen sind.

2. Laschenkette nach Anspruch 1,
dadurch gekennzeichnet,
daß die Erweiterung (12) als im Bereich der Längsmitte der radialen Endstege (11) angeordnete, außen abgerundete Nase (14) ausgebildet ist.

## Claims

1. Plate-link chain for continuously variable conical pulley gearing, whose plate stacks, which form the chain links and are assembled in a triple-plate connection, are connected together in an articulated manner by pins (3), which chain comprises thrust pieces, which act transversely to the longitudinal direction of the chain for transmitting frictional force between the conical pulleys and the plate-link chain, wherein the pitch spacing (7, 9) of the chain links between the hinge points differs in a regular or irregular manner through the use of appropriately different basic plate types (1, 10), characterised in that the basic plate types (1, 10), which relate to an increased pitch spacing (9) and project into the latter, are provided at at least one of their two radial end webs (11) in the longitudinal direction (8) of the chain, with a widened part (12) which extends between the consecutive plates, possibly up to the hinge pins (3) which adjoin outside of the plates.

2. Plate-link chain according to claim 1, characterised in that the widened part (12) is formed as an externally rounded lug (14) which is disposed in the region of the longitudinal centre of the radial end webs (11).

## Revendications

1. Chaîne de Galle pour des variateurs continus à poulies coniques, dont les paquets de mailles, formant les chaînons et montés dans une attache à trois mailles, sont reliés les uns aux autres de manière articulée par des boulons (3), et laquelle présente, transversalement à la direction longitudinale de chaîne, des éléments de poussée efficaces pour la transmission de la force de frottement entre des poulies coniques et une chaîne de Galle, l'intervalle de séparation (7, 9) des chaînons entre les emplacements d'articulation étant réalisé différemment, de manière régulière ou irrégulière, en utilisant des types fondamentaux de maille (1, 10) conformément différents,
caractérisée en ce que
les types fondamentaux de maille (1, 10), appartenant à un intervalle de séparation (9) agrandi et y faisant saillie, sont pourvus, au moins à une de leurs deux entretoises d'extrémité (11) radiales, dans le sens de la chaîne (8), d'un élargissement (12) suffisant entre les mailles successives, le cas échéant jusqu'aux boulons d'articulation (3) adjacents extérieurement aux mailles.

2. Chaîne de Galle selon la revendication 1,
caractérisée en ce que
l'élargissement (12) est profilé comme un nez (14) extérieurement arrondi ménagé dans la zone de la partie centrale longitudinale des entretoises d'extrémité (11) radiales.
